# EUROPEAN PATENT SPECIFICATION

(11) **EP 1 959 155 B1**
(45) Date of publication and mention of the grant of the patent: **05.05.2010**
(21) Application number: 07003045.7
(22) Date of filing: 13.02.2007
(51) Int. Cl.: F16F 9/516

(54) **A dissipation method of impact hydraulic damper loadings**
Verfahren zur Vernichtung von Stossbelastungen hydraulischer Stoßdämpfer
Procédé de dissipation de charges d'impact d'un amortisseur hydraulique

(43) Date of publication of application: 20.08.2008
(73) Proprietor: Delphi Technologies, Inc., Troy, Michigan 48007 (US)
(72) Inventor: Knapczyk, Marcin, 31-261 Krakow (PL); Maniowski, Michal Dariusz, 30-334 Krakow (PL)
(74) Representative: Fox-Male, Nicholas Vincent Humbert

(56) References cited:
- EP-A1- 0 409 094
- EP-A1- 1 215 414
- EP-A1- 1 538 367
- FR-A- 1 181 645
- FR-A- 2 041 630
- US-A1- 2003 010 587

## Description

The present invention relates to a novel dissipation method of impact loadings as defined in the preamble of claim 1, met in particular in a suspension system of a motor vehicle during extreme events.

A typical telescopic hydraulic suspension damper comprises a tube filled with working liquid, inside of which a slidable piston assembly is placed. The piston assembly is attached to a piston rod led outside the damper through a piston rod guide. Damper comprises a set of rebound and compression valve assemblies which control the flow of working liquid between compression, extension and reservoir chambers of the damper.

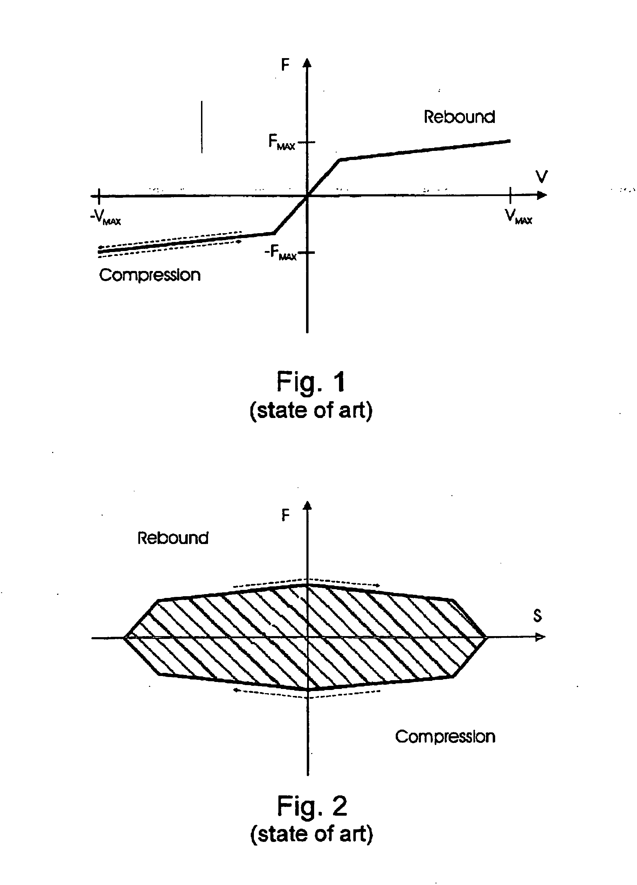

Characteristics of a passive shock-absorber for passenger cars are matched in order to achieve an established compromise between car handling, ride and NVH (noise-vibration-harshness) requirements. Typical characteristic of damping force versus velocity is presented in Fig. 1. Two operating regions of the damper can be distinguished in dependence on a car wheel bounce velocity. The first one, also referred to as "comfort relevant, is defined by low velocities and damping forces selected for the best possible comfort and car body control. For higher wheel velocities, excited during impact loading conditions, safety becomes the major criterion for the damping forces selection. The second region, also referred to as "safety relevant", is usually described by higher damping forces evolved according to some different rule. Definitions of the comfort and safety regions are application-dependent. In a basic damper, the damping forces are adjusted for the both regions using e.g. a regular valve system with limited capabilities.

In case of hard road-motion conditions, insufficiently dissipated mechanical energy by a basic damper must be then absorbed by the suspension spring components, resulting in large suspension deflections and an unfavourable response of the vibrating system. This often leads to the suspension closure or jounce bumper engagement, what negatively affects the car safety, comfort, strength and durability of structural components, and noise issues, especially for vehicles with short suspension strokes.

In order to evaluate a damper energy dissipation capability, a characteristic of damping force as a function of piston displacement/stroke may be studied, for a defined kinematic excitation conditions, usually using sinusoidal course with constant stroke and variable frequency. An example of such characteristic for a typical damper is shown in Fig. 2. The area surrounded by this closed curve represents amount of energy dissipated by the damper during one excitation cycle.

It is desirable to increase an amount of the energy the damper is capable to dissipate outside the comfort relevant region, but at the same time to keep the maximum force generated by the damper at possibly low level.

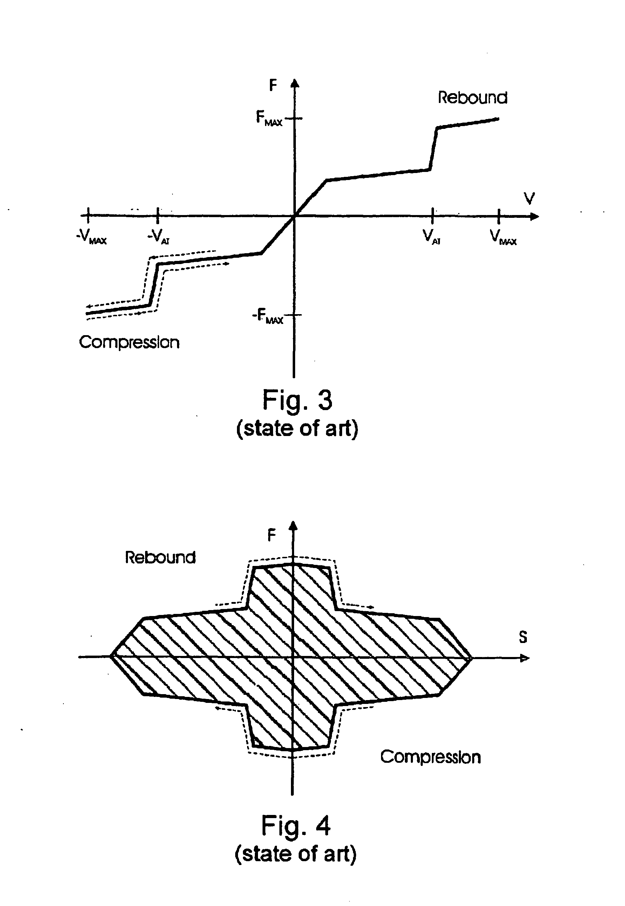

From the state of art, there are known hydraulic suspension dampers and damping methods enabling to achieve additional dissipation of mechanical, energy during extreme loading conditions. Dampers of this type are disclosed e.g. in patent specifications EP 1 215 414, EP 0 409 094, FR 2 041 630, DE G 94 02 417.0 and EP 1 538 367. Exemplary relations of damping force as a function of the piston velocity and as a function of the piston displacement for the aforementioned dampers are shown in Figs. 3 and 4 respectively. In these approaches, the damping force is adjusted as a function of the damper piston velocity. After exceeding by the piston velocity a predefined activation threshold (V_{AT}), additional damping forces are generated and sustained as long as the piston velocity remains above this threshold (cf. Fig. 1 with Fig. 3 and Fig. 2 with Fig. 4). The damping force expands and contracts according to the same rule.

The object of the present invention is to provide a damping method for a hydraulic damper enabling to achieve further increase of energy dissipation for impact loadings, when the wheel bounce velocity exceeds some predefined activation threshold (V_{AT}). In particular, the object of the invention is to provide a method which would beneficially affect a car comfort and safety, as well as durability of the suspension components in cases of impact loadings, and which would not interfere with the damper performance in normal, comfort relevant operating range.

The proposed method is a consequence of detailed study of impact loading phenomenon carried out by the inventors.

According to the novel method of the present invention, additional damping forces are generated as long as the piston velocity magnitude, is above a predefined deactivation threshold, which is significantly lower than the activation threshold, and when the piston velocity magnitude decreases below the deactivation threshold the damping force returns to the comfort relevant characteristic below the activation threshold.

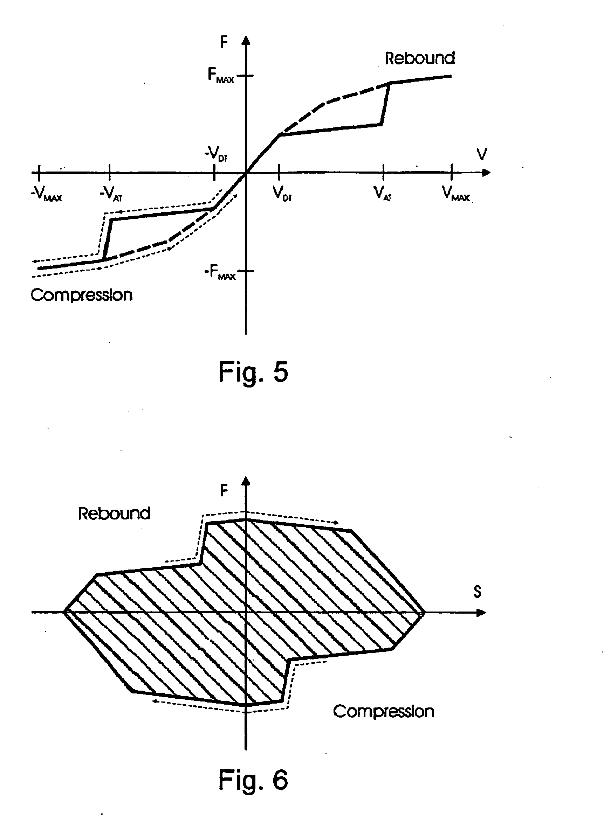

The method advantageously improves the damper performance by increasing the amount of dissipated energy. Using the proposed idea, one can dissipate the same amount of mechanical energy as using the prior art methods (cf. Fig. 3 with Fig. 5, and Fig. 4 with Fig. 6), having at the same time lower peak forces and smoother force decay, thus avoiding a noise and jerk excitation. The method may be applied both for the compression and rebound stroke of the piston.

The method may be implemented e.g. in a passive damper, provided with a specially designed valve system, supplementing the regular valves of the piston assembly and/or base assembly of the damper tube.

The terms "increase" or "decrease" of the piston velocity as used herein are taken to mean the increase or decrease of the absolute value (magnitude) of the piston velocity, regardless of the assumed sense to define the compression and rebound stroke of the piston.

The term "additional damping forces" denotes forces, which are generated differently than the forces generated in the comfort relevant range, e.g. with the use of above mentioned additional valve assemblies that are activated and deactivated correspondingly after the velocity increases above or decreases below some predefined thresholds.

The fundamental feature of the method is that the activation and deactivation thresholds are different to each other and the method depends only on the velocity magnitude. Therefore, the additional damping forces may be generated in any suspension position, where the long effective stroke enables to decelerate the unsprung mass at extreme events before it reaches full compression or rebound position of the suspension.

Preferably, the deactivation threshold value is close to 0 m/s.

To implement the method of the invention, it is advantageous to provide the hydraulic suspension damper with a device for adjusting the damping force in a function of the piston velocity, and in particular a device comprising at least one piston valve assembly and/or at least one base valve assembly.

Therefore, the method of the invention may be easily applied using known technical means from the prior art.

The invention is explained below with reference to the illustrating drawings, on which:
Fig. 1 and Fig. 2 show schematically characteristics of a damping force as a function of the piston velocity and as a function of the piston stroke respectively, both for a typical damper according to the state of the art,
Fig. 3 and Fig. 4 show schematically characteristics of a damping force as a function of the piston velocity and as a function of the piston stroke respectively, both for a damper according to the state of the art, which comprises additional compression and rebound valve assemblies, progressively increasing the damping force after reaching a predetermined piston velocity activation threshold,
Fig. 5 and Fig. 6 show schematically characteristics of a damping force as a function of the piston velocity and as a function of the piston stroke respectively, for an exemplary damper designed according to the principles of the present invention, and
Fig. 7 and Fig. 8 show characteristics of a damping force as a function of the piston velocity and as a function of the piston stroke respectively, obtained by the inventors during the tests of an actual damper designed according to the principles of the present invention.

It is assumed that all the mentioned characteristics are determined for the same course of the piston velocity in dependence of the piston stroke. In other words, although the damping forces are different, they have been generated for the same kinematic excitation.

As schematically shown in Fig. 1, during compression and rebound stroke of a typical, prior art damper, the damping force (F) expands and contracts according to some function of the piston velocity (V). The corresponding force vs. stroke (S) relationship of this damper is schematically shown in Fig. 2. The damping force is equal to zero at the ends of the rebound and compression strokes, i.e. at the extreme positions of the piston assembly within the damper tube, and reaches its maximum values (F_{MAX}) in the middle of the stroke. The surface surrounded by the force vs. stroke curve is equal to the work of the damper or the amount of energy dissipated by the damper during one full cycle.

The characteristic in Fig. 3 corresponds to the damper in which the damping force increases and decreases according to another function of the piston velocity, where after exceeding by the piston velocity some predefined activation threshold (V_{AT}), additional damping forces are generated so that the damping force progressively increases in order to slow down the accelerated masses to a greater extent. The force vs. stroke relationship for this damper is plotted in Fig. 4, showing the increase of the damping force generated after the velocity threshold (V_{AT}).

Additional damping forces may be achieved e.g. by providing the piston assembly with additional valves acting after the piston reaches the velocity activation threshold. Comparing Fig. 2 and Fig. 4, one may easily note that application of an additional compression and rebound valve assemblies would enable to obtain the same amount of dissipated energy (area under the curve) for a shorter stroke of a car suspension. However, it is visible in Fig. 3 that the damping force changes along the same path for the piston velocity increase or decrease. In other words, in this approach, the activation threshold and deactivation threshold are the same.

Fig. 5 schematically shows the force-velocity relation for an exemplary damper, in which the method of the present invention is implemented. As shown by means of a solid line in Fig. 5, while the piston velocity increases above the activation threshold (V_{AT}), the additional damping force is generated and sustained until it reaches its maximum value (at V_{MAX}). However, as indicated by arrows, while the piston velocity decreases (dashed line course), the additional damping force is sustained up to the point where the piston velocity drops below the predefined deactivation threshold (V_{DT}), after which the damping force returns back to the normal characteristic in comfort region.

As shown in Fig. 6, plotting the force to stroke relation corresponding to Fig. 5, after activation of the high speed sensitive system, the generated force rapidly increases at the beginning of an impact loading, this force is next sustained until the very end of the stroke, and subsequently it vanishes smoothly, avoiding the possibility to induce additional jerks in the car body. The amount of the energy dissipated by the damper is also largely increased.

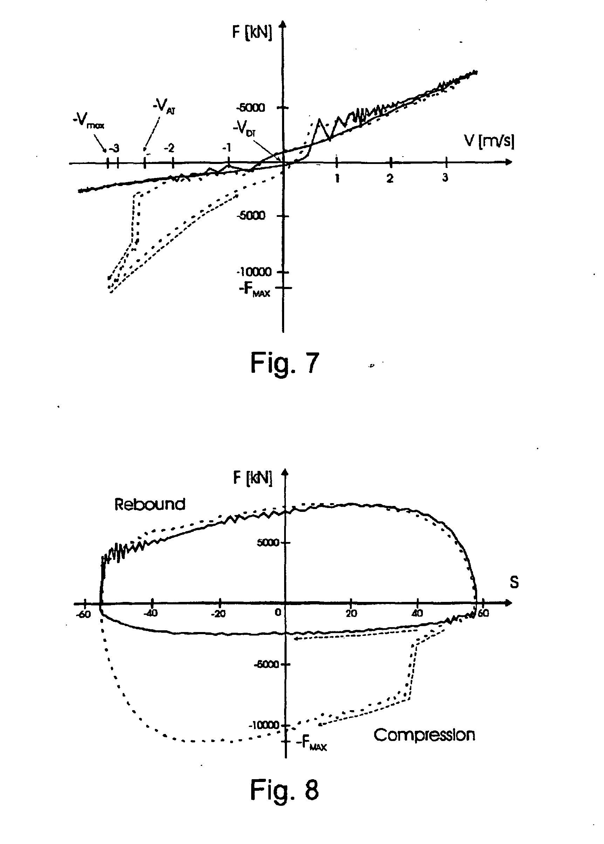

Figs. 7 and 8 show actual characteristics obtained by the inventors during the tests of a basic damper (solid line) and the damper provided with additional passive valve assemblies on the compression side, which implements the method of the present invention (dashed line). Both dampers were tested on a rig with the same sinusoidal excitation. The valve assemblies of the second damper were adjusted so that the activation threshold (V_{AT}) was about 2.5 m/s, the deactivation threshold (V_{DT}) was about 0 m/s and the maximum force (F_{MAX}) of about 11 kN at V_{MAX}.

Obviously, the thresholds V_{AT} and V_{DT} of the method of the present invention should be adjusted in dependence on application.

The above embodiments of the method according to the invention are merely exemplary. The graphs are not necessarily to scale, and, for better illustration of the invention, they may be exaggerated or minimized.

## Claims

1. A dissipation method of impact hydraulic damper loadings, where the damping force is adjusted in a function of the piston velocity according to some predefined comfort and safety relevant characteristics and where after exceeding by the piston velocity magnitude a predefined activation threshold, the method involves generation of additional damping forces, which are sustained as long as the piston velocity magnitude remains above the activation threshold, **characterised in that**, said additional damping forces are generated as long as the piston velocity magnitude is above a predefined deactivation threshold (V_{DT}), which is significantly lower than the activation threshold (V_{AT}), and when the piston velocity magnitude decreases below the deactivation threshold the damping force (F) returns to the comfort relevant characteristic below the activation threshold.

2. The method according to claim 1, **characterised in that**, the deactivation threshold value is close to 0 m/s.

3. The method according to claim 1 or 2, **characterised in that**, the hydraulic damper comprises a device for adjusting the damping force in a function of the piston velocity.

4. The method according to claim 3, **characterised in that**, the device comprises at least one piston valve assembly and/or at least one base valve assembly.

## Patentansprüche

1. Verfahren zur Vernichtung von Stossbelastungen hydraulischer Stoßdämpfer, wobei die Dämpfungskraft in einer Abhängigkeit von der Kolbengeschwindigkeit gemäß einigen vordefinierten komfort- und sicherheitsrelevanten Charakteristika angepasst ist, und wobei das Verfahren, nachdem ein vordefinierter Aktivierungsschwellwert durch den Kolbengeschwindigkeitswert überschritten wurde, die Erzeugung von zusätzlichen Dämpfungskräften beinhaltet, die solange aufrechterhalten werden, wie die Kolbengeschwindigkeitsgröße über dem Aktivierungsschwellwert bleibt, **dadurch gekennzeichnet, dass** die zusätzlichen Dämpfungskräfte solange erzeugt werden, wie die Kolbengeschwindigkeitsgröße über einem vordefinierten Deaktivierungsschwellwert (V_{DT}) ist, der signifikant niedriger ist als der Aktivierungsschwellwert (V_{AT}), und, wenn die Kolbengeschwindigkeitsgröße unter den Deaktivierungsschwellwert abfällt, die Dämpfungskraft (F) auf die komfortrelevante Charakteristik unter dem Aktivierungsschwellwert zurückgeht.

2. Verfahren nach Anspruch 1, **dadurch gekennzeichnet, dass** der Wert des Deaktivierungsschwellwerts dicht bei 0 m/s ist.

3. Verfahren nach Anspruch 1 oder 2, **dadurch gekennzeichnet, dass** der hydraulische Stossdämpfer eine Vorrichtung zum Anpassen der Dämpfungskraft in einer Abhängigkeit von der Kolbengeschwindigkeit aufweist.

4. Verfahren nach Anspruch 3, **dadurch gekennzeichnet, dass** die Vorrichtung zumindest eine Kolbenventilanordnung und/oder zumindest eine Bodenventilanordnung aufweist.

## Revendications

1. Un procédé de dissipation de charges dynamiques d'amortisseur hydraulique, dans lequel la force d'amortissement est ajustée en fonction de la vitesse de piston, en fonction de certaines caractéristiques prédéfinies de confort et de sécurité, et dans lequel, après dépassement d'un seuil d'activation prédéfini par la grandeur de vitesse de piston, le procédé comprend la génération de forces d'amortissement supplémentaires qui sont maintenues tant que la grandeur de vitesse de piston reste au-dessus du seuil d'activation, **caractérisé en ce que** lesdites forces d'amortissement supplémentaires sont générées tant que la grandeur de vitesse de piston est supérieure à un seuil de désactivation prédéfini (V_{DT}) qui est nettement inférieur au seuil d'activation (V_{AT}) et, lorsque la grandeur de vitesse de piston diminue en-dessous du seuil de désactivation, la force d'amortissement (F) revient à la caractéristique de confort, en-dessous du seuil d'activation.

2. Procédé selon la revendication 1, **caractérisé en ce que** la valeur de seuil de désactivation est proche de 0 m/s.

3. Procédé selon la revendication 1 ou 2, **caractérisé en ce que** l'amortisseur hydraulique comprend un dispositif pour ajuster la force d'amortissement en fonction de la vitesse de piston.

4. Procédé selon la revendication 3, **caractérisé en ce que** le dispositif comprend au moins un robinet à piston et/ou au moins un robinet à pied.
